# EUROPÄISCHE PATENTANMELDUNG

(11) **EP 4 279 789 A1**
(43) Veröffentlichungstag der Anmeldung: **22.11.2023**
(21) Anmeldenummer: 23172519.3
(22) Anmeldetag: 10.05.2023
(51) Int. Cl.: F16L 37/38, F16L 37/413, F16K 17/196, B25F 5/00, F16L 37/34

(54) **ANSCHLUSSKUPPLUNG FÜR EINEN DRUCKLUFTVERBRAUCHER**

(30) Priorität: 19.05.2022 DE 102022112616
(71) Anmelder: Gröbner Fertigungs GmbH, 83367 Petting (DE)
(72) Erfinder: Gröbner, Andreas, 83329 Waging am See (DE)
(74) Vertreter: Naessens, Stephan

(57) **Zusammenfassung**

Es wird eine Anschlusskupplung für einen Druckluftverbraucher zur Druckluftversorgung mit einem Gehäuse (1) mit einem mit Druckluft durchströmbaren Innenraum (2) vorgeschlagen, wobei an einem ersten Ende des Gehäuses (1) ein erster Anschlussabschnitt (3) zum Befestigen an dem Druckluftverbraucher und an einem zweiten Ende des Gehäuses (1) ein zweiter Anschlussabschnitt (4) zum Verbinden mit einer Druckluftversorgung vorgesehen sind, und wobei im Innenraum (2) des Gehäuses (1) ein erstes federbelastetes und axial bewegbares Verschlusselement (5) angeordnet ist, welches mit einem zweiten federbelasteten und axial bewegbaren Verschlusselement (6) einen Dichtungssitz (7) zum Verschließen des Innenraumes (2) bildet. Ferner wird ein Druckluftverbraucher mit zumindest einer Anschlusskupplung vorgeschlagen.

## Beschreibung

Die vorliegende Erfindung betrifft eine Anschlusskupplung für einen Druckluftverbraucher zur Druckluftversorgung, wobei die Anschlusskupplung ein Gehäuse mit einem mit Druckluft durchströmbaren Innenraum umfasst, wobei an einem ersten Ende des Gehäuses ein erster Anschlussabschnitt zum Befestigen an einem Druckluftverbraucher und an einem zweiten Ende des Gehäuses ein zweiter Anschlussabschnitt zum Verbinden mit einer Druckluftversorgung vorgesehen sind. Ferner betrifft die Erfindung einen Druckluftverbraucher mit zumindest einer Anschlussanordnung.

Allgemein bekannt sind derartige Anschlusskupplungen für die Druckluftversorgung von mit Druckluft betriebenen Bearbeitungsgeräten, Werkzeugmaschinen oder dergleichen. Hierzu wird die Anschlusskupplung zunächst mit einem mit Druckluft zu versorgenden Druckluftverbraucher mit einem genormten Anschlussabschnitt fest verbunden. Anschließend kann an der Anschlusskupplung zum Beispiel ein Druckluftschlauch einer Druckluftversorgung zum Beispiel lösbar an einem weiteren ebenfalls genormten Anschlussabschnitt der Anschlusskupplung angeschlossen werden.

Bei derartigen bekannten Anschlusskupplungen hat sich gezeigt, dass insbesondere bei Bearbeitungsgeräten, Werkzeugmaschinen oder dergleichen, die als Druckluftverbraucher verwendet werden, die Gefahr besteht, dass Verschmutzungen, wie zum Beispiel Metallspäne oder dergleichen, durch die offene Anschlusskupplung in die Druckluftverbraucher gelangen und dort unerwünschte Beschädigungen verursachen.

Demzufolge liegt der vorliegenden Erfindung die Aufgabe zugrunde, eine Anschlusskupplung und einen Druckluftverbraucher mit einer Anschlusskupplung vorzuschlagen, bei denen nur im Betrieb eine Durchströmung von Druckluft ermöglicht wird und somit ein Eindringen von Fremdkörpern durch die Anschlusskupplung verhindert wird.

Diese Aufgabe wird erfindungsgemäß durch die Merkmale des Patentanspruches 1 bzw. 9 gelöst. Vorteilhafte und beanspruchte Weiterbildungen ergeben sich aus den Unteransprüchen und der Beschreibung sowie den Zeichnungen.

Somit wird eine Anschlusskupplung für einen Druckluftverbraucher zur Druckluftversorgung mit einer Anschlusskupplung mit einem Gehäuse mit einem mit Druckluft durchströmbaren Innenraum vorgeschlagen, wobei an einem ersten Ende des Gehäuses ein erster zum Beispiel genormter Anschlussabschnitt zum Befestigen an dem Druckluftverbraucher und an einem zweiten Ende des Gehäuses ein zweiter zum Beispiel genormter Anschlussabschnitt zum Verbinden mit einer Druckluftversorgung vorgesehen sind. Um ein unerwünschtes Verschmutzen des Druckluftverbrauchers durch die Anschlusskupplung sicher zu verhindern, ist vorgesehen, dass im Innenraum des Gehäuses ein federbelastetes und axial bewegbares erstes Verschlusselement angeordnet ist, welches mit einem federbelasteten und axial bewegbaren zweiten Anschlusselement einen Dichtungssitz oder dergleichen zum Verschließen des Innenraumes bildet.

Auf diese Weise wird eine Anschlusskupplung vorgeschlagen, mit der eine Abdichtung des Innenraumes auf konstruktiv einfache Weise mit den beiden Verschlusselementen im nicht druckbeaufschlagten Zustand quasi automatisch aufgrund der federbelasteten Verschlusselemente realisiert wird, sodass kein Schmutz bzw. keine Fremdpartikel aus der Umgebung zum Beispiel in den angeschlossenen Druckluftverbraucher gelangen können, wenn die Anschlusskupplung zum Beispiel von der Druckluftversorgung entkoppelt ist. Darüber hinaus wird das Verschließen des Innenraumes in vorteilhafter Weise in dem vorhandenen Innenraum des Gehäuses realisiert, ohne dass zusätzlicher Bauraum für zusätzliche Betätigungsbauteile erforderlich ist.

In besonders vorteilhafter Weise wird somit das Verschließen konstruktiv einfach und kostengünstig durch die federbelasteten Verschlusselemente realisiert, während das Öffnen durch das Durchströmen der Druckluft quasi automatisch bei der vorgeschlagenen Anschlusskupplung dadurch realisiert wird, dass das erste Verschlusselement durch die in eine erste Strömungsrichtung strömende Druckluft zum Öffnen des Innenraumes bewegbar ist und dass das zweite Verschlusselement durch die in eine zweite der ersten Strömungsrichtung entgegengesetzten Strömungsrichtung strömende Druckluft zum Öffnen des Innenraumes bewegbar ist. Demzufolge wird auch das Öffnen in beide Strömungsrichtungen jeweils durch die durchströmende Druckluft quasi automatisch ohne eine Zwangsbetätigung oder dergleichen bei der vorgeschlagenen Anschlusskupplung realisiert.

Im Rahmen der Erfindung kann vorgesehen sein, dass das erste Verschlusselement etwa hülsenförmig oder dergleichen ausgeführt ist und dass das zweite Verschlusselement etwa stangenförmig oder dergleichen ausgeführt ist, wobei das zweite stangenförmige Verschlusselement im Inneren des ersten hülsenförmigen Verschlusselement axial bewegbar angeordnet ist. Durch die ineinander angeordnete koaxiale Ausrichtung der beiden Verschlusselemente wird eine besonders bauraumsparende Anordnung bei der vorgeschlagenen Anschlusskupplung realisiert, um einerseits die geschlossene Position als auch die in jede Strömungsrichtung geöffnete Position bei der vorgeschlagenen Anschlusskupplung vorzusehen.

Die abgedichtete bzw. geschlossene Position der federbelasteten Verschlusselemente wird dadurch realisiert, dass ein erstes Ende des ersten Verschlusselements und ein erstes Ende des zweiten Verschlusselements den Dichtungssitz oder dergleichen zum Verschließen des Innenraumes des Gehäuses bilden.

Um die federbelasteten Verschlusselemente in der abgedichteten bzw. geschlossenen Position zum Bilden eines gemeinsamen Dichtungssitzes zu halten, ist beispielsweise vorgesehen, dass ein zweites Ende des ersten Verschlusselements einen ersten Anschlagabschnitt oder dergleichen und ein zweites Ende des zweiten Verschlusselements einen zweiten Anschlagabschnitt oder dergleichen zum Halten bzw. Positionieren der Verschlusselemente in der geschlossenen Position zum Verschließen des Innenraumes des Gehäuse in beide Strömungsrichtungen aufweisen.

Eine besonders kostengünstige Ausführung der Anschlagfunktion hinsichtlich des ersten Anschlagabschnittes wird dadurch realisiert, dass der erste Anschlagabschnitt als Flanschkragen oder dergleichen an einer Innendurchmesserstufe oder dergleichen im Inneren des Gehäuses abgestützt ist. Eine besonders montagefreundliche Lösung der Anschlagfunktion hinsichtlich des zweiten Anschlagabschnittes wird dadurch realisiert, dass der zweite Anschlagabschnitt als an dem zweiten Ende des zweiten Verschlusselements über zum Beispiel eine Sicherungsmutter oder dergleichen befestigtes Anschlagelement o. ä. an einem Sicherungselement, wie zum Beispiel einem Sicherungsring, einer Sicherungsscheibe oder dergleichen, am Innendurchmesser des Innenraumes des Gehäuses abgestützt ist.

Eine konstruktiv einfache und kostengünstige Ausführung bei der vorgeschlagenen Anschlusskupplung wird dadurch realisiert, dass eine federbelastete Relativbewegung zwischen dem ersten Verschlusselement und dem zweiten Verschlusselement durch zumindest eine Druckfeder oder dergleichen realisiert wird.

Besonders bevorzugt ist die Verwendung von Druckluft bei der vorgeschlagenen Anschlusskupplung. Grundsätzlich ist die vorgeschlagene Anschlusskupplung jedoch für beliebige unter Druck stehende gasförmige Medien geeignet.

Die der Erfindung zugrunde liegende Aufgabe wird auch durch einen Druckluftverbraucher mit zumindest einer vorbeschriebenen Anschlusskupplung gelöst. Hieraus ergeben sich die bereits beschriebenen Vorteile und weitere Vorteile. Insbesondere werden als Druckluftverbraucher zum Beispiel Bearbeitungsgeräte, Bearbeitungsmaschinen verwendet, die über die Anschlusskupplung mit der notwendigen Druckluftversorgung verbunden werden. Beispielsweise können Druckluftschlagschrauber, Druckluftpistolen, Druckluftsägen oder dergleichen mit der vorgeschlagenen Anschlusskupplung an eine Druckluftversorgung angeschlossen werden.

Nachfolgend wird die vorliegende Erfindung anhand der Zeichnungen weiter erläutert.

Es zeigen:
Figur 1 eine Explosionsdarstellung einer möglichen Ausführungsvariante einer erfindungsgemäßen Anschlusskupplung;
Figur 2 eine geschnittene Ansicht der Anschlusskupplung in einem nicht mit Druckluft beaufschlagten und damit geschlossenen Zustand;
Figur 3 eine geschnittene Ansicht der Anschlusskupplung in einem in eine erste Strömungsrichtung beaufschlagten und damit geöffneten Zustand;
Figur 4 eine geschnittene Ansicht der Anschlusskupplung in einem in eine zweite Strömungsrichtung beaufschlagten und damit geöffneten Zustand; und
Figur 5 eine dreidimensionale Ansicht eines druckluftbetriebenen Bearbeitungsgerätes als Druckluftverbraucher.

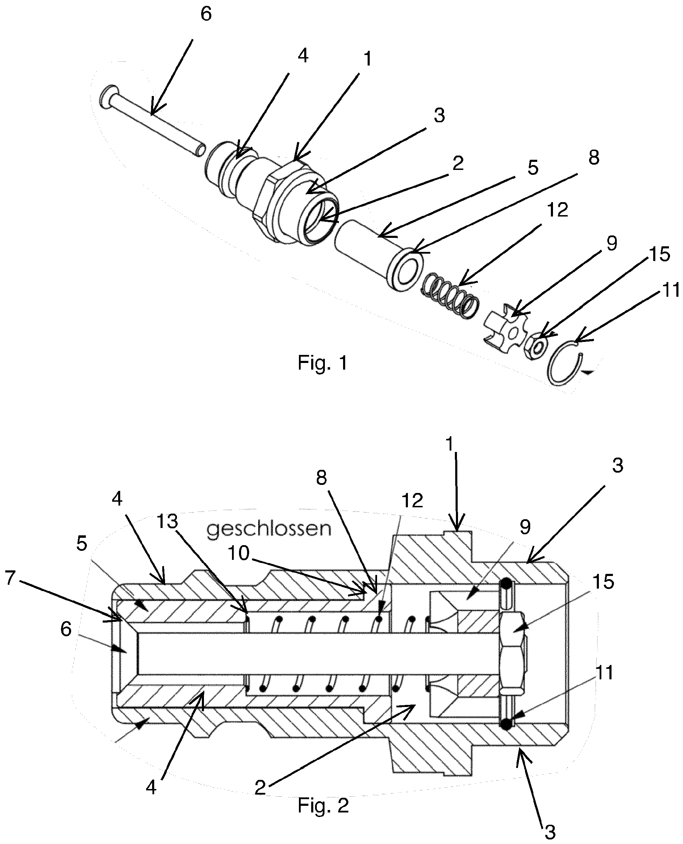

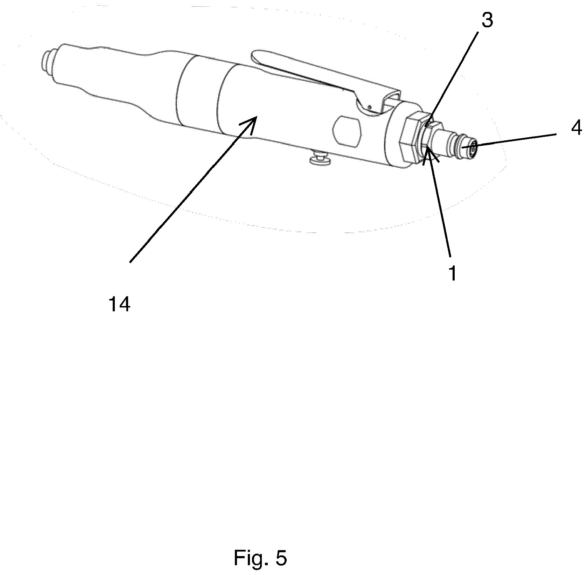

In den Figuren 1 bis 4 sind verschiedene Zustände bzw. Positionen einer möglichen Ausführungsvariante einer erfindungsgemäßen Anschlusskupplung beispielhaft gezeigt, während Figur 5 als Druckluftverbraucher ein druckluftbetriebenes Bearbeitungsgerät 14 zur Aufnahme verschiedener Werkzeuge zum Schleifen, Polieren, Trennen oder dergleichen mit der Anschlusskupplung exemplarisch dargestellt ist. Beispielsweise können auch druckluftbetriebene Bearbeitungsmaschinen bzw. Werkzeugmaschinen als Druckluftverbraucher mit zumindest einer Anschlusskupplung ausgerüstet sein.

Die Anschlusskupplung kann für verschiedene Druckluftverbraucher eingesetzt werden, wobei die Anschlusskupplung zur Druckluftversorgung ein Gehäuse 1 mit einem mit Druckluft durchströmbaren Innenraum 2 umfasst, wobei an einem ersten Ende des Gehäuses 1 ein erster Anschlussabschnitt 3 zum Befestigen an dem Druckluftverbraucher bzw. an dem Bearbeitungsgerät 14 und an einem zweiten Ende des Gehäuses 1 ein zweiter Anschlussabschnitt 4 zum Verbinden mit einer nicht weiter dargestellten Druckluftversorgung vorgesehen sind. Der erste Anschlussabschnitt 3 weist beispielsweise ein Außengewinde oder dergleichen auf, um die Anschlusskupplung genormt an den Druckluftverbraucher zu befestigen. Der zweite Anschlussabschnitt 4 ist beispielsweise als sogenannter Klinkenanschluss ausgeführt und dient zum genormten Befestigen eines Druckluftschlauches einer Druckluftversorgung. Auf diese Weise ist durch die genormten Anschlussabschnitte 3, 4 ein universeller Einsatz der vorgeschlagenen Anschlusskupplung möglich.

Um zu verhindern, dass Verschmutzungen aus der Umgebung in den Innenraum 2 des Gehäuses 1 und damit auch in den Druckluftverbraucher bzw. in das Bearbeitungsgerät 14 gelangen, ist vorgesehen, dass im Innenraum 2 des Gehäuses 1 ein erstes federbelastetes und axial bewegbares Verschlusselement 5 angeordnet ist, welches mit einem zweiten federbelasteten und axial bewegbaren Verschlusselement 6 einen Dichtungssitz 7 zum Verschließen des Innenraumes 2 bildet.

Wie insbesondere aus Figur 1 ersichtlich ist, sind das erste Verschlusselement 5 etwa hülsenförmig ausgeführt und das zweite Verschlusselements 6 etwa stangenförmig ausgeführt. Das zweite stangenförmige Verschlusselement 6 ist im Inneren des ersten hülsenförmigen Verschlusselements 5 axial bewegbar geführt bzw. angeordnet. Demzufolge sind die beiden Verschlusselemente 5, 6 koaxial angeordnet und radial gesehen verschachtelt im Innenraum 2 des Gehäuses 1 der Anschlusskupplung angeordnet.

In Figur 2 ist die Anschlusskupplung im geschlossenen Zustand bzw. in der geschlossenen Position der Verschlusselemente 5, 6 dargestellt, wobei in diesem Zustand keine Druckluftbeaufschlagung erfolgt und der Innenraum aufgrund der federbelasteten Verschlusselemente 5,6 verschlossen ist. Demzufolge sind die federbelasteten Verschlusselemente 5, 6 derart im Innenraum 2 des Gehäuses 1 positioniert, dass ein erstes Ende des ersten Verschlusselements 5 und ein erstes Ende des zweiten Verschlusselements 6 den gemeinsamen Dichtungssitz 7 bilden. In der dargestellten geschlossenen Position der Anschlusskupplung können in vorteilhafter Weise keine Fremdkörper in den Innenraum 2 eindringen.

Ferner ist vorgesehen, dass ein zweites Ende des ersten Verschlusselements 5 einen ersten Anschlagabschnitt als Flanschkragen 8 und ein zweites Ende des zweiten Verschlusselements 6 einen zweiten Anschlagabschnitt als an dem zweiten Ende des zweiten Verschlusselements 6 über eine Sicherungsmutter 15 befestigtes Anschlagelement 9 zum Positionieren der Verschlusselemente 5, 6 in der geschlossenen Position zum Verschließen des Innenraumes 2 aufweisen. Das erste Verschlusselement 5 stützt sich mit dem Flanschkragen 8 an einer Innendurchmesserstufe 10 im Innenraum des Gehäuses 1 ab. Das zweite Verschlusselement 6 stützt sich mit dem Anschlagelement 9 an einer Sicherungsscheibe 11 am Innendurchmesser des Innenraumes 2 des Gehäuses 1 ab. Das Anschlagelement 9 weist mehrere axiale Freistellungen auf, sodass Druckluft axial durch die Freistellungen an dem Anschlagelement 9 vorbeiströmen kann.

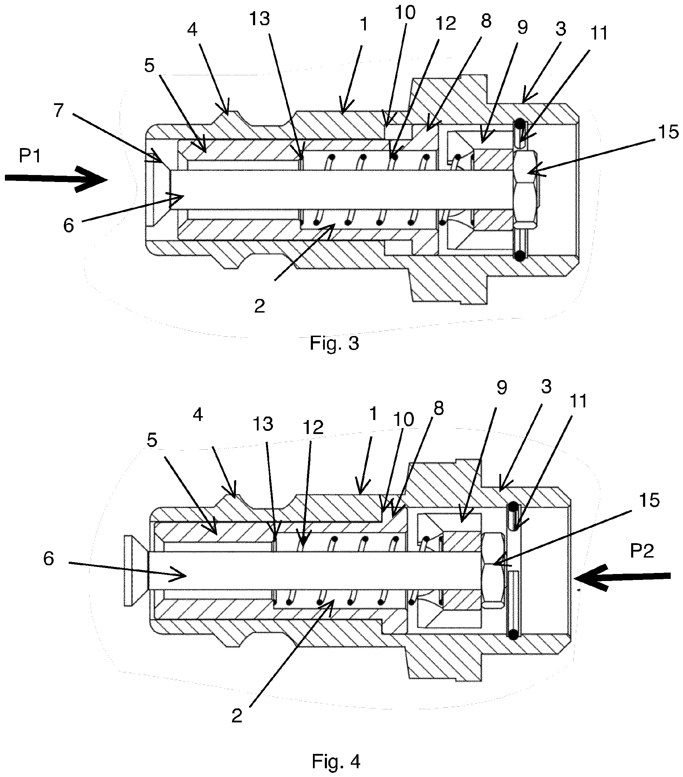

Figur 3 zeigt eine Druckluftbeaufschlagung an der in der Zeichnungsebene linken Seite an der Anschlusskupplung. Demzufolge wird das erste Verschlusselement 5 durch die in eine erste Strömungsrichtung P1 strömende Druckluft zum Durchströmen des Innenraumes 2 in der Zeichnungsebene nach rechts gegen eine Federkraft einer Druckfeder 12 bewegt, wie dies auch der Pfeil in Figur 3 andeutet. Dadurch hebt sich das erste Verschlusselement 5 mit seinem Flanschragen 8 von der Innendurchmesserstufe 10 ab. Somit ist es möglich, dass Druckluft aus der nicht weiter dargestellten Druckluftversorgung in den angeschlossenen Druckluftverbraucher bzw. in die Bearbeitungsmaschine einströmen kann.

In Figur 4 ist eine Druckluftbeaufschlagung an der in der Zeichnungsebene rechten Seite an der Anschlusskupplung gezeigt. Demzufolge wird das zweite Verschlusselement 6 durch die in eine zweite Strömungsrichtung P2 strömende Druckluft zum Durchströmen des Innenraumes 2 in der Zeichnungsebene nach links gegen die Federkraft der Druckfeder 12 bewegt, wie dies auch der Pfeil in Figur 4 andeutet. Dadurch hebt sich das zweite Verschlusselement 6 mit seinem Anschlagelement 9 von der Sicherungsscheibe 11 am Innendurchmesser des Innenraumes 2 ab. Somit ist es möglich, dass Druckluft aus dem Druckluftverbrauchern in die Umgebung oder in die Druckluftversorgung strömen kann.

Demzufolge wird eine federbelastete Relativbewegung durch die Druckfeder 12 zwischen dem ersten Verschlusselement 5 und dem zweiten Verschlusselement 6 ermöglicht. Die Druckfeder 12 liegt mit einem Ende an einer Innendurchmesserstufe 13 des hülsenförmigen ersten Verschlusselements 5 und mit ihrem anderen Ende an dem Anschlagelement 9 an.

In Figur 5 ist das druckluftbetriebene Bearbeitungsgerät 14 zum Aufnehmen von verschiedenen Werkzeugen zum Bearbeiten von Werkstücken beispielhaft dargestellt. Zum Betrieb des Bearbeitungsgerätes 14 ist eine Druckluftversorgung erforderlich, welche über die vorbeschriebene Anschlusskupplung an dem Bearbeitungsgerät 14 angeschlossen wird. Hierzu beispielsweise eine Anschlusskupplung an dem Bearbeitungsgerät 14 über den ersten Anschlussabschnitt 3 befestigt, wobei die Druckluftversorgung über einen Schlauch an dem zweiten Anschlussabschnitt 4 befestigt wird, um das Bearbeitungsgerät 14 mit Druckluft zu versorgen.

### Bezugszeichen

- 1: Gehäuse der Anschlusskupplung
- 2: Innenraum
- 3: erster Anschlussabschnitt
- 4: zweiter Anschlussabschnitt
- 5: erstes Verschlusselement
- 6: zweites Verschlusselement
- 7: Dichtungssitz
- 8: Flanschkragen als erster Anschlagabschnitt
- 9: Anschlagelement als zweiter Anschlagabschnitt
- 10: Innendurchmesserstufe im Innenraum
- 11: Sicherungselement bzw. Sicherungsscheibe
- 12: Druckfeder
- 13: Innendurchmesserstufe am ersten Verschlusselement
- 14: Bearbeitungsgerät
- 15: Sicherungsmutter
- P1: erste Strömungsrichtung von Druckluftversorgung zu Druckluftverbraucher
- P2: zweite Strömungsrichtung von Druckluftverbraucher zu Umgebung bzw. Druckluftversorgung

## Patentansprüche

1. Anschlusskupplung für einen Druckluftverbraucher zur Druckluftversorgung, mit einem Gehäuse (1) mit einem mit Druckluft durchströmbaren Innenraum (2), wobei an einem ersten Ende des Gehäuses (1) ein erster Anschlussabschnitt (3) zum Befestigen an dem Druckluftverbraucher und an einem zweiten Ende des Gehäuses ein zweiter Anschlussabschnitt (4) zum Verbinden mit einer Druckluftversorgung vorgesehen sind, **dadurch gekennzeichnet, dass** im Innenraum (2) des Gehäuses (1) ein erstes federbelastetes und axial bewegbares Verschlusselement (5) angeordnet ist, welches mit einem zweiten federbelasteten und axial bewegbaren Verschlusselement (6) einen Dichtungssitz (7) zum Verschließen des Innenraumes (2) bildet.

2. Anschlusskupplung nach Anspruch 1, **dadurch gekennzeichnet, dass** das erste Verschlusselement (5) durch die in eine erste Strömungsrichtung (P1) strömende Druckluft zum Öffnen des Innenraumes (2) bewegbar ist und dass das zweite Verschlusselement (6) durch die in eine zweite der ersten Strömungsrichtung (P1) entgegengesetzten Strömungsrichtung (P2) strömende Druckluft zum Öffnen des Innenraumes (2) bewegbar ist.

3. Anschlusskupplung nach Anspruch 1 oder 2, **dadurch gekennzeichnet, dass** das erste Verschlusselement (5) etwa hülsenförmig ausgeführt ist und dass das zweite Verschlusselement (6) etwa stangenförmig ausgeführt ist, wobei das zweite stangenförmige Verschlusselement (6) im Inneren des ersten hülsenförmigen Verschlusselement (5) axial bewegbar angeordnet ist.

4. Anschlusskupplung nach einem der vorangehenden Ansprüche, **dadurch gekennzeichnet, dass** ein erstes Ende des ersten Verschlusselements (5) und ein erstes Ende des zweiten Verschlusselements (6) den Dichtungssitz (7) zum Verschließen des Innenraumes (2) bilden.

5. Anschlusskupplung nach einem der vorangehenden Ansprüche, **dadurch gekennzeichnet, dass** ein zweites Ende des ersten Verschlusselements (5) einen ersten Anschlagabschnitt und ein zweites Ende des zweiten Verschlusselements (6) einen zweiten Anschlagabschnitt zum Halten der Verschlusselemente (5, 6) in einer geschlossenen Position zum Verschließen des Innenraumes (2) des Gehäuses (1) in beide Strömungsrichtungen (P1, P2) aufweisen.

6. Anschlusskupplung nach Anspruch 5, **dadurch gekennzeichnet, dass** der erste Anschlagabschnitt als Flanschkragen (8) an einer Innendurchmesserstufe (10) im Innenraum (2) des Gehäuses (1) abgestützt ist und dass der zweite Anschlagabschnitt als an dem zweiten Ende des zweiten Verschlusselements (6) über eine Sicherungsmutter (15) befestigtes Anschlagelement (9) an einem Sicherungselement (11) am Innendurchmesser des Innenraumes (2) des Gehäuses (1) abgestützt ist.

7. Anschlusskupplung nach einem der vorangehenden Ansprüche, **dadurch gekennzeichnet, dass** eine federbelastete Relativbewegung zwischen dem ersten Verschlusselement (5) und dem zweiten Verschlusselement (6) durch zumindest eine Druckfeder (12) vorgesehen ist.

8. Anschlusskupplung nach einem der vorangehenden Ansprüche, **dadurch gekennzeichnet, dass** als Druckluft ein unter Druck stehendes gasförmiges Medium vorgesehen ist.

9. Druckluftverbraucher mit zumindest einer Anschlusskupplung nach einem der vorangehenden Ansprüche.
